# EUROPEAN PATENT SPECIFICATION

(11) **EP 3 800 709 B1**
(45) Date of publication and mention of the grant of the patent: **06.05.2026**
(21) Application number: 19896132.8
(22) Date of filing: 22.11.2019
(51) Int. Cl.: H01M 4/36, H01M 4/587, H01M 4/48, H01M 4/38, H01M 4/13, H01M 10/052

(54) **ANODE ACTIVE MATERIAL FOR LITHIUM SECONDARY BATTERY AND SECONDARY BATTERY COMPRISING SAME**
ANODENAKTIVMATERIAL FÜR LITHIUMSEKUNDÄRBATTERIE SOWIE SEKUNDÄRBATTERIE DAMIT
MATÉRIAU ACTIF D'ANODE POUR BATTERIE SECONDAIRE AU LITHIUM ET BATTERIE SECONDAIRE AU LITHIUM LE COMPRENANT

(30) Priority: 12.12.2018 KR 20180160091
(43) Date of publication of application: 07.04.2021
(73) Proprietor: LG Energy Solution, Ltd., Seoul 07335 (KR)
(72) Inventor: LEE, Kwan Hee, Daejeon 34122 (KR); RYU, Duk Hyun, Daejeon 34122 (KR)
(74) Representative: Plasseraud IP
(86) International application number: PCT/KR2019/016155
(87) International publication number: WO 2020/122459

(56) References cited:
- EP-A1- 2 579 365
- CN-A- 103 647 056
- CN-A- 106 495 144
- JP-A- 2015 165 482
- KR-A- 20150 060 513
- KR-A- 20180 124 659
- CHEN HEDONG ET AL: "Mass-producible method for preparation of a carbon-coated graphite@plasma nano-silicon@carbon composite with enhanced performance as lithium ion battery anode", ELECTROCHIMICA ACTA, ELSEVIER, AMSTERDAM, NL, vol. 249, 25 July 2017 (2017-07-25), pages 113 - 121, XP085175127, ISSN: 0013-4686, DOI: 10.1016/J.ELECTACTA.2017.07.146
- HU XIAOQIAO ET AL: "A Double Core-shell Structure Silicon Carbon Composite Anode Material for a Lithium Ion Battery", SILICON, SPRINGER, DORDRECHT, vol. 10, no. 4, 15 November 2017 (2017-11-15), pages 1443 - 1450, XP036528811, ISSN: 1876-990X, [retrieved on 20171115], DOI: 10.1007/S12633-017-9624-Z
- S. P. KUKSENKO: "Silicon-containing anodes with high capacity loading for lithium-ion batteries", RUSSIAN JOURNAL OF ELECTROCHEMISTRY, vol. 50, no. 6, 1 June 2014 (2014-06-01), RU, pages 537 - 547, XP055238688, ISSN: 1023-1935, DOI: 10.1134/S1023193514060068

## Description

### [Technical Field]

The present invention relates to a negative electrode active material for a lithium secondary battery and a secondary battery including the same, and more particularly, to a negative electrode active material including low-expanded artificial graphite exhibiting low expansion characteristics during charging and discharging, and a lithium secondary battery including the same.

This application claims the benefit of priority based on Korean Patent Application No. 10-2018-0160091, filed on December 12, 2018.

### [Background Art]

As the price of energy sources increases due to depletion of fossil fuels and the interest in environmental pollution increases, the demand for environmentally friendly alternative energy sources becomes an indispensable factor for future life. Especially, as technology development and demand for mobile devices are increasing, demand for secondary batteries as energy sources is rapidly increasing.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having high energy density, discharge voltage, and output stability.

Generally, in order to prepare a secondary battery, first, a positive electrode and a negative electrode are formed by applying an electrode mixture containing an electrode active material to a surface of a current collector, then a separate is interposed therebetween to thereby make an electrode assembly, which is then mounted in a cylindrical or rectangular metal can or inside a pouch-type case of an aluminum laminate sheet, and a liquid electrolyte in injected or impregnated into the electrode assembly or a solid electrolyte to prepare a secondary battery.

In general, the negative electrode of a lithium secondary battery uses a carbon material such as graphite, but the theoretical capacity density of carbon is 372 mAh/g (833 mAh/cm³). Therefore, in order to improve the energy density of the negative electrode, silicon (Si), tin (Sn), oxides and alloys thereof which are alloyed with lithium are considered as negative electrode materials. Among them, silicon-based materials have attracted attention due to their low cost and high capacity (4200 mAh/g).

However, although the silicon-based material exhibits a much higher theoretical capacity than graphite, when the silicon is mixed with lithium ions, the volume expands four times or more, and when containing more than a predetermined amount, as the cycle progresses, a volume expansion of the entire electrode is caused, which causes a loss of the conductive network of the battery, thereby rapidly decreasing the charge/discharge capacity. In addition, as the cycle initial efficiency is lowered, the advantage of the silicon-based material capable of realizing a high energy density may disappear. Particularly, in the case of a cylindrical battery, when the volume of the silicon-based material is expanded and the diameter of the wound cell is increased, it becomes difficult to store the battery, thereby making it difficult to increase the energy density.

Therefore, while overcoming the low energy density limit of the carbon-based negative electrode active material, research has been continuously conducted to reduce side effects due to the expansion characteristics of the silicon-based material.

Japanese Laid-Open Patent Publication No. 2018-008405 describes a method of preparing a composite of carbon particles having fine unevenness and using it as a negative electrode material together with silicon oxide so that the cycle characteristics are not deteriorated in the expansion and contraction of silicon oxide during charging and discharging.

On the other hand, Korean Patent Publication No. 2017-0136878 discloses a method of improving the life characteristics and high temperature storage characteristics by using a secondary particle artificial graphite containing a primary particle having a specific average particle diameter as a negative electrode active material.

In addition, Korean Patent No. 1704103 discloses a method for improving the life characteristics by suppressing the volume expansion of the negative electrode active material and solving the short-circuit problem by including together the porous silicon-based particles and fine carbon particles having different average particle diameters.

In addition, in the negative electrode active material including a carbon-based material and a silicon-based material to realize high energy density, in order to reduce side effects due to volume expansion of silicon-based materials, various methods such as adding metal-based materials, preparing new composites, or changing particle sizes have been studied.

The publication CHEN HEDONG ET AL: "Mass-producible method for preparation of a carbon-coated graphite@plasma nano-silicon@carbon composite with enhanced performance as lithium ion battery anode", ELECTROCHIMICA ACTA, ELSEVIER, AMSTERDAM, NL, vol. 249, 25 July 2017 discloses negative electrod active materials comprising artificial graphite and silicon-containing material.

### [Disclosure]

### [Technical Problem]

The present invention relates to a negative electrode active material for a lithium secondary battery and a secondary battery including the same. The negative electrode active material according to the present invention includes a carbon-based material and a silicon-based material to achieve a high energy density, while suppressing volume expansion of the electrode by including a certain amount of artificial graphite having a low expansion property in the carbon-based material, to thereby prevent the loss of the conductive network.

### [Technical Solution]

The present invention relates to a negative electrode active material for a lithium secondary battery and a secondary battery including the same. The negative electrode active material according to the present invention is a negative electrode active material for a lithium secondary battery including a carbon-based material and a silicon-based material, and the carbon-based material includes low expansion artificial graphite. In this case, the low-expansion artificial graphite has low expansion characteristics during battery charging and discharging, and the volume is expanded to less than 25%, more preferably less than 23% from the initial state even after repeated charge and discharge cycles.

If the carbonaceous material includes artificial graphite in which the volume is expanded by 25% or more compared to the initial state, or is natural graphite or other carbonaceous material having high expansion characteristics, cycle characteristics may be sharply degraded.

In addition, the low-expansion artificial graphite is included at 65 to 95% by weight, more preferably 75 to 85% by weight relative to the total weight of the negative electrode active material. If less than 65% of the low-expansion artificial graphite is included in the total weight of the carbon-based material, the initial efficiency may be lowered during repeated charge and discharge cycles at the time the manufacture of the secondary battery, thereby lowering the energy density. On the other hand, even if the content of artificial graphite is more than 95% by weight, there is no apparent increase in effect, and it is not preferable because the economic efficiency is low in consideration of the manufacturing cost of low-expansion artificial graphite.

Meanwhile, the carbonaceous material may further include a known carbonaceous material used for a negative electrode for a lithium secondary battery in addition to the low expansion artificial graphite, and it is acceptable to select widely used natural graphite. Therefore, in the case of including the low-expansion artificial graphite in the above weight percent range, it is economically preferable to use natural graphite.

The negative electrode active material according to the present invention includes a silicon-based material, and the content of the silicon-based material relative to the total weight of the negative electrode active material may be 1 to 10% by weight, more preferably 3 to 7% by weight. Silicon-based material is included to maximize the energy density properties, and when added in less than 1% by weight, it does not show an energy density improvement effect and when added in more than 10% by weight, the adverse effect of lowering the energy density may be shown due to the volume expansion characteristics of the silicon-based material.

In this case, the silicon-based material may include one or two or more silicon oxidebased materials, and may specifically use silicon dioxide (SiO₂).

The negative electrode active material may be coated on one or both surfaces of a negative electrode current collector to manufacture a negative electrode for a lithium secondary battery. When the negative electrode for such a lithium secondary battery is applied, it is possible to manufacture a lithium secondary battery with the maximum energy density according to the characteristics of the silicon-based negative electrode material. In particular, the negative electrode active material for lithium secondary battery and the negative electrode using the same of the present invention is most effective when applied to the cylindrical secondary battery which mainly uses silicon-based negative electrode material.

### [Advantageous Effects]

The present invention provides a negative electrode active material including a carbon-based material and a silicon-based material and including a predetermined amount of low-expansion artificial graphite, which has improved the disadvantages of energy density and cycle characteristics deterioration due to volume expansion that can appear in the negative electrode active material containing a silicon-based material. In particular, in the present invention, it is not necessary to reduce the volume expansion rate of the silicon-based material itself, or change or process the form, particle size, structure, etc. of the carbon-based material as in the prior art, so that the manufacturing process is simple and economical.

### [Brief Description of the Drawings]

FIG. 1 shows the expansion characteristics according to the charge and discharge cycle of natural graphite, low expansion artificial graphite (artificial graphite A) and conventional artificial graphite (artificial graphite B).
FIG. 2 illustrates a comparison of cycle characteristics according to types of carbonaceous materials used in a negative electrode active material in secondary batteries manufactured according to an example and a comparative example of the present invention.
FIG. 3 illustrates a comparison of cycle characteristics according to the content of silicon-based materials used in a negative electrode active material in secondary batteries manufactured according to an example and a comparative example of the present invention.
FIG. 4 illustrates a comparison of cycle characteristics according to the content of low expansion artificial graphite used in a negative electrode active material in secondary batteries manufactured according to an example and a comparative example of the present invention.
FIG. 5 illustrates a comparison of the cycle characteristics according to the low expansion artificial graphite content in a secondary battery manufactured according to an example and a comparative example of the present invention.

### [Detailed Description of the Preferred Embodiments]

The embodiments described in the specification and the configurations described in the drawings are only the most preferred embodiments of the present invention, and do not represent all of the technical ideas of the present invention. The invention is defined by the appended claims.

Throughout this specification, "expansion characteristics of low-expansion artificial graphite" are represented by the change of the active material layer thickness of the low-expansion artificial graphite according to the charge and discharge cycle. Specifically, after manufacturing a negative electrode using a low-expansion artificial graphite as an active material and a secondary battery having such a negative electrode, the charge and discharge cycle is repeated until there is no change in the thickness of the negative electrode active material layer. Thereafter, the thickness of the negative electrode active material layer before the charge and discharge cycle is compared with the thickness of the active material layer after the charge and discharge cycle, and it is considered that the volume of the low-expansion artificial graphite expanded by the rate at which the thickness of the active material layer increased.

Also, throughout the specification, when an element is referred to as "including" an element, it is understood that the element may include other elements as well unless specifically stated otherwise.

As used throughout this specification, the terms "about", "substantially", and the like, are used to mean a value or something like this when unique manufacturing and material tolerances are presented, and the terms are used to prevent unscrupulous infringers from unfair use of the disclosure including accurate or absolute figures in order to aid in the understanding of the present disclosure.

Throughout this specification, the term "combination(s) thereof" included in the expression of the Markush form means one or more mixtures or combinations selected from the group consisting of the elements described in the Markush form representation, and it means to include one or more selected from the group consisting of the above components.

The present invention relates to a negative electrode for an electrochemical device and an electrochemical device having the same. In the present invention, the electrochemical device includes all devices that undergo an electrochemical reaction, and specific examples thereof include all kinds of primary and secondary cells, fuel cells, solar cells, or capacitors. In particular, a lithium secondary battery such as a lithium metal secondary battery, a lithium ion secondary battery, a lithium polymer secondary battery or a lithium ion polymer secondary battery is preferable among the secondary batteries.

Throughout this specification, the expression "A and/or B" means "A or B or both."

Hereinafter, the present invention will be described in detail.

The present invention relates to a negative electrode active material for a lithium secondary battery and a secondary battery including the same. The negative electrode active material according to the present invention is a negative electrode active material for a lithium secondary battery including a carbon-based material and a silicon-based material, and the carbon-based material includes low expansion artificial graphite. As described above, in the case where only the carbon-based material is used as the negative electrode active material, the negative electrode active material has a low energy density, thereby limiting the battery capacity design. In order to overcome this limitation, when the lithium and silicon-based materials are included in the negative electrode active material, the energy density is increased, thereby allowing a high capacity battery to be implemented. However, since the silicon-based material has high expansion characteristics, the charge and discharge cycle may be repeated, causing breakage of the conductive network. Therefore, when the silicon-based material is included at a high content, the energy density may be lowered or the lifespan characteristics may be reduced.

As described above, various studies have been conducted to improve cycle characteristics of a negative electrode active material including a carbon-based material and a silicon-based material. As described above, the prior art proposes a method of modifying carbon-based particles or silicon-based particles or adding additional materials.

Specifically, with respect to the case of a carbon-based material, prior arts disclose methods for preventing breakage due to volume expansion of silicon-based materials and extending lifespan by altering particle surface morphology, controlling particle diameters, preparing secondary particles, preparing composites, and the like.

For example, Japanese Patent Laid-Open No. 2018-008405 discloses manufacturing a carbon composite in order to modify the shape of the carbon particles to have fine irregularities. It is disclosed that when the carbon composite and silicon oxide are used together as negative electrode materials, the cycle characteristics are not deteriorated despite the volume expansion of silicon oxide, a silicon-based material.

In addition, Korean Patent Application Publication No. 2017-0136878 discloses preparing a negative electrode active material including primary particles having adjusted the particle size as a carbon-based material and secondary particles including the same which has exhibited similar effects.

On the other hand, in relation to a method of directly inhibiting the volume expansion of the silicon-based particles, Korean Patent No. 1704103 provides porous silicon-based particles and provides a negative electrode active material including fine and granulated carbon particles having average particle diameters which are different from those of porous silicon particles.

The present invention solves the problems of the prior art by a method different from the above-described prior art, and provides a negative electrode active material containing a low-expansion artificial graphite of a certain content relative to the total weight of the carbon-based material.

In the case of carbon-based materials, unlike the silicon-based materials, the expansion properties are not high, and thus, the volume expansion of the carbon-based materials has not been studied in depth. However, according to the experiments of the present applicant, when the negative electrode active material is prepared by including a certain amount of low expansion artificial graphite having a relatively low expansion property, even if a silicon-based material having a large volume expansion property is included, the initial cycle efficiency was improved, which was an unexpected effect. Accordingly, in the case of the negative electrode to which the negative electrode active material of the present invention is applied and a secondary battery having such a negative electrode, it is possible to realize a high capacity without modifying or further processing of the carbon-based material while using existing known silicon-based materials without processing.

Specifically, the negative electrode active material according to the present invention is a negative electrode active material for a lithium secondary battery including a carbon-based material and a silicon-based material, and the carbon-based material includes low expansion artificial graphite. At this time, the low-expansion artificial graphite showing the low expansion characteristics at the time of charge/discharge of the battery is used. According to one embodiment of the present invention, low-expansion artificial graphite used herein is expanded in volume to less than 25%, more preferably less than 23% from the initial state even after repeated charge and discharge cycles When using graphite or natural graphite which is expanded by 25% or more as shown in Examples and Comparative Examples to be described later, a phenomenon that the energy density of the battery, which is a characteristic of the negative electrode active material including a silicon-based material, is lowered is shown.

In addition, the low-expansion artificial graphite content is 65 to 95% by weight, more preferably 75 to 85% by weight relative to the total weight of the carbon-based material. If less than 65% of the low-expansion artificial graphite is included in the total weight of the carbon-based material, the initial efficiency may be lowered during repeated charge and discharge cycles at the time the manufacture of the secondary battery, thereby lowering the energy density. On the other hand, even if the content of artificial graphite is more than 95% by weight, there is no apparent increase in effect, and it is not preferable because the economic efficiency is low in consideration of the manufacturing cost of low-expansion artificial graphite.

Meanwhile, the carbonaceous material may further include a known carbonaceous material used for a negative electrode for a lithium secondary battery in addition to the low expansion artificial graphite, and may be selected from natural graphite which is generally used. Therefore, in the case of including the low-expansion artificial graphite in the above weight percent range, it is economically preferable to use natural graphite which is inexpensive and easy to obtain.

The negative electrode active material according to the present invention includes a silicon-based material, and the content of the silicon-based material relative to the total weight of the negative electrode active material may be 1 to 10% by weight, more preferably 3 to 7% by weight. Silicon-based material is included to maximize the energy density properties, and when added in less than 1% by weight, it does not show an energy density improvement effect and when added in more than 10% by weight, the adverse effect of lowering the energy density may be shown due to the volume expansion characteristics of the silicon-based material. Therefore, in order to obtain excellent energy density characteristics, it is desirable to adjust the content within the above range to take advantage of the silicon-based material.

In this case, the silicon-based material may include one or two or more silicon oxidebased materials, and may use silicon and/or silicon oxide. According to one embodiment of the present invention, preferably, silicon dioxide (SiO₂) may be used, and when included according to the composition ratio, a preferable effect was shown.

The negative electrode active material may be coated on one or both surfaces of a negative electrode current collector to manufacture a negative electrode for a lithium secondary battery. When the negative electrode for such a lithium secondary battery is applied, it is possible to manufacture a lithium secondary battery with the maximum energy density according to the characteristics of the silicon-based negative electrode material. In particular, the negative electrode active material for lithium secondary battery and the negative electrode using the same of the present invention is most effective when applied to the cylindrical secondary battery which mainly uses silicon-based negative electrode material. However, the application of the negative electrode active material and the negative electrode using the same according to the present invention can be applied to various types of secondary batteries, and is not limited to the cylindrical secondary battery.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### <Measurement of expansion characteristics according to types of carbonaceous materials>

### Preparation of Carbon Based Materials

Natural graphite, artificial graphite A, which is low expansion artificial graphite having low expansion characteristics, and commonly used artificial graphite B were prepared.

### Production of coin cell

In order to compare the expansion characteristics, each coin half battery using the natural graphite, artificial graphite A, and artificial graphite B, respectively, as a negative electrode active material was prepared.

The manufacturing method of the specific coin half battery is as follows.

94 wt% of negative electrode active material, 2 wt% of multilayer carbon nanotubes having an average diameter of 20 nm and an average length of 2 µm as a conductive material, and 4 wt% of polyvinylidene fluoride as a binder were mixed, then slurried with N-methyl2-pyrrolidone, then applied on a copper foil of 20 µm thickness to have a thickness of about 100 µm, then vacuum-dried and pressed at 120°C, and then punched into a circle with a diameter of 13 mm, to thereby prepare a negative electrode. Coin cells were prepared by using a punched negative electrode and metal lithium of thickness of 0.3 mm thick as counter electrode, mixing ethylene carbonate and diethyl carbonate at a ratio of 3 : 7, and electrolyte in which 1 mol of LiPF₆ is dissolved.

Measurement of Expansion Characteristics according to Charge and Discharge Cycles

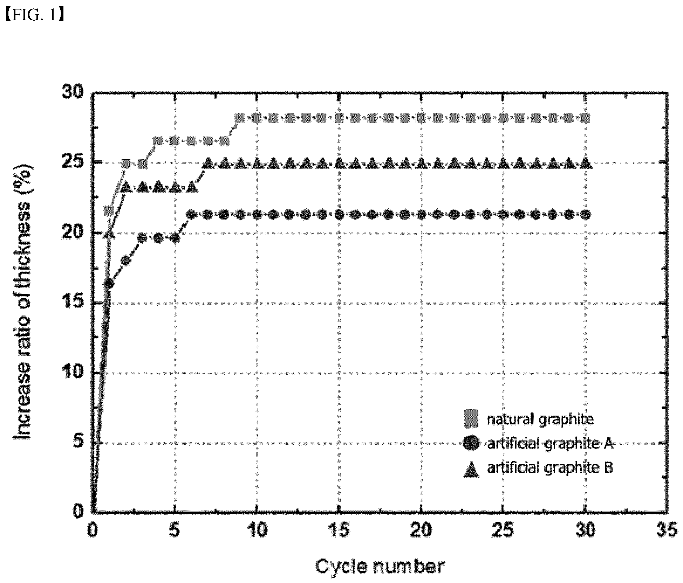

For each of the coin cells, a charge/discharge cycle of discharging to 2.5V after charging to 4.25V was repeated and the thickness of the negative electrode active material was measured at each cycle to derive an expansion ratio for each negative electrode active material, and the results are shown in FIG. 1.

As shown in FIG. 1, natural graphite showed a constant volume expansion rate of 28% after 10 cycles. Artificial graphite A showed a constant volume expansion rate of 22% after 6 cycles, and artificial graphite B showed a constant volume expansion rate of 25% after 7 cycles.

### <Battery Cycle Characteristics Experiment according to Composition and Content of Carbon-Based Substance>

### Example 1

Artificial graphite A, natural graphite and silicon oxide were mixed in a weight ratio of 75 : 20 : 5 and used as a negative electrode active material. Other than that, a coin cell was manufactured in the same manner as in the measurement of the carbon-based material expansion characteristic, and the charge and discharge cycle of discharging up to 2.5V after charging to 4.25V was repeated 200 times.

### Comparative Example 1

The experiment was conducted in the same manner as in Example 1 except that natural graphite and silicon dioxide are mixed at the weight ratio of 95 : 5 and used as a negative electrode active material.

### Comparative Example 2

The experiment was conducted in the same manner as in Example 1 except that artificial graphite B, natural graphite and silicon oxide were mixed at the ratio of 75 : 20 : 5 and used as a negative electrode active material.

### Results and review

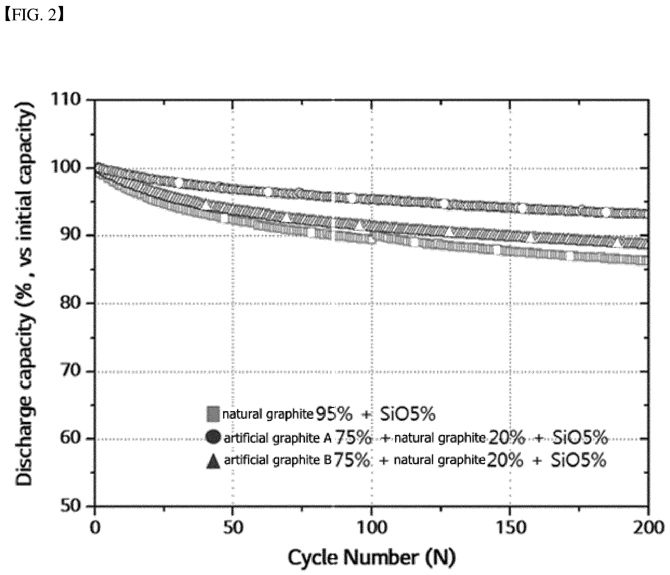

The cycle characteristic by the above respective examples and comparative examples are shown in FIG. 2. In the case of Example 1 including 75% by weight of artificial graphite A having an expansion characteristic of 22% relative to the total weight of the negative electrode active material, the cycle characteristics were excellent. On the other hand, in Comparative Examples 1 and 2 to which natural graphite and artificial graphite B having 25% of expansion characteristics were applied, the capacity tended to decrease in only 50 cycles, and a large difference occurred in the battery capacity in 200 cycles.

### <Battery Cycle Characteristics Experiments According to Silicon Dioxide Content>

### Comparative Example 3

The experiment was conducted in the same manner as in Example 1 except that artificial graphite B, natural graphite and silicon oxide were mixed at the ratio of 75 : 10 : 15 and used as a negative electrode active material.

### Results and review

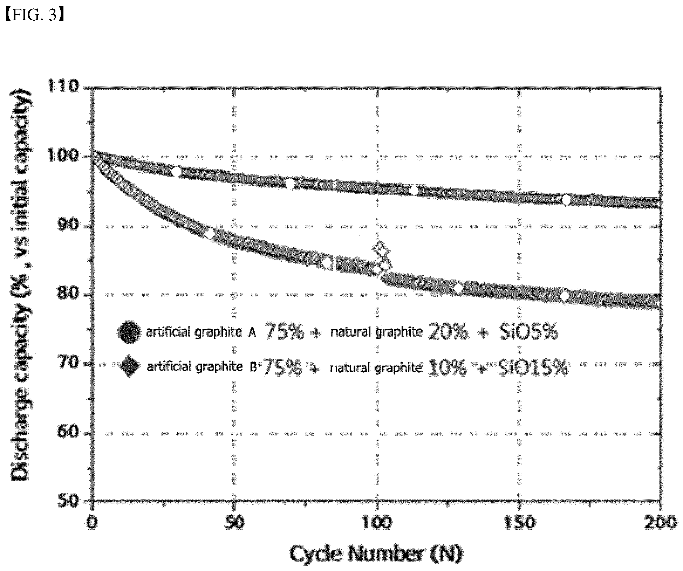

The cycle characteristics of Comparative Example 3 and Example 1 are shown in FIG. 3 together. Comparing FIG. 2 and FIG. 3, in the case of Comparative Example 3 in which the content of silicon dioxide exceeds 10 wt% with respect to the total weight of the negative electrode active material, cycle characteristics are further lowered than in Comparative Example 2. From this it can be seen that the cycle characteristics are deteriorated when the silicon dioxide content is included in excess of 10% by weight.

### <Cycle Characteristics Experiment According to Content of Artificial Graphite A>

### Comparative Example 4

The experiment was conducted in the same manner as in Example 1 except that artificial graphite A, natural graphite and silicon oxide were mixed at the ratio of 30 : 65 : 5 and used as a negative electrode active material.

### Comparative Example 5

The experiment was conducted in the same manner as in Example 1 except that artificial graphite A, natural graphite and silicon oxide were mixed at the ratio of 50 : 45 : 5 and used as a negative electrode active material.

### Example 2

The experiment was conducted in the same manner as in Example 1 except that artificial graphite A, natural graphite and silicon oxide were mixed at the ratio of 85 : 10 : 5 and used as a negative electrode active material.

### Results and review

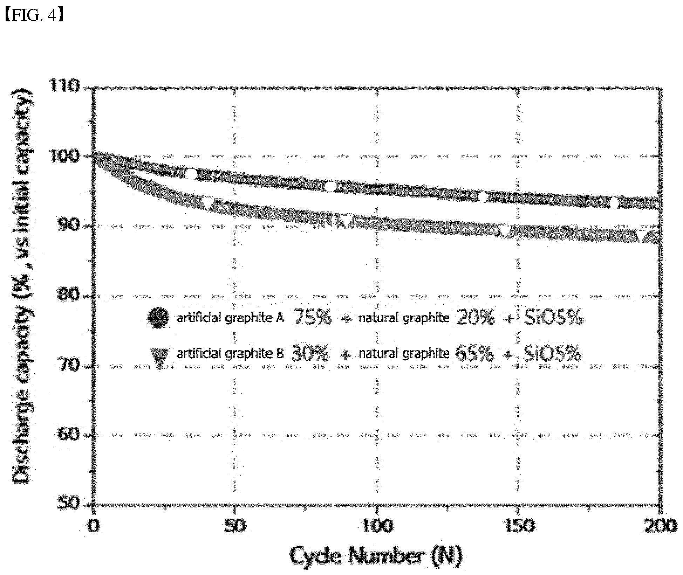

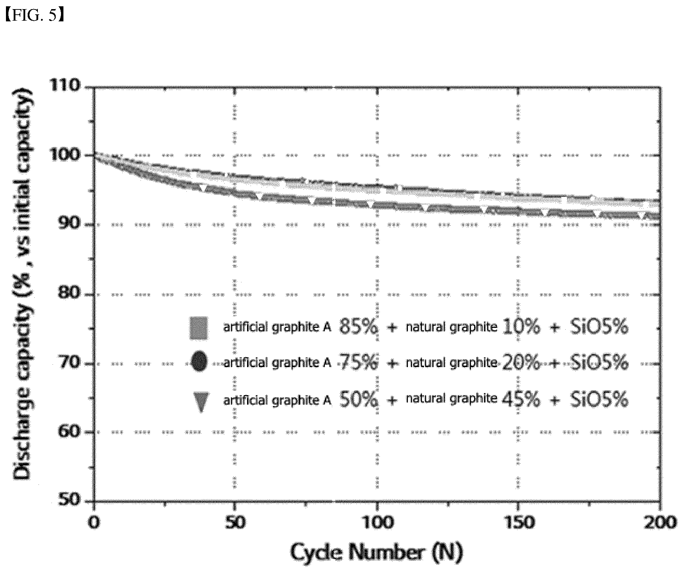

Experimental results according to the Examples and Comparative Examples are shown in FIGS. 4 and 5 together with Example 1. First, in the case of Comparative Examples 4 and 5, in which the artificial graphite content was 30% by weight and 50% by weight with respect to the total weight of the negative electrode active material, capacity characteristics were initially lowered. In addition, in the case of Example 2, which is 85% by weight, the capacity characteristics were finely excellent after 200 cycles compared to Example 1. Therefore, at least the low-expansion artificial graphite is shown to improve the cycle characteristics when more than 65% by weight is included, and the higher the content, the more the effect is improved, but from 75% by weight or more, the improvement effect was not significant. In view of this tendency, considering the economical efficiency, the content range of the low-expansion artificial graphite is preferably 95% by weight or less, and more preferably 75% by weight to 85% by weight.

## Claims

1. A negative electrode active material for a lithium secondary battery including a carbon-based material and a silicon-based material,
wherein the carbon-based material includes low-expansion artificial graphite,
wherein a volume of the low-expansion artificial graphite expands by less than 25% when a battery is charged and discharged; the expansion characteristics being determined by the change of the active material layer thickness of the low-expansion artificial graphite, using a negative electrode using a low-expansion artificial graphite as an active material and a secondary battery having such a negative electrode, the charge and discharge cycle being repeated until there is no change in the thickness of the negative electrode active material layer,
the negative electrode using 94 wt% of a low-expansion artificial graphite as an active material, 2 wt% of multilayer carbon nanotubes having an average diameter of 20 nm and an average length of 2 µm as a conductive material, and 4 wt% of polyvinylidene fluoride as a binder, and
the charge/discharge cycle being as follows: discharging to 2.5V after charging to 4.25V; and
wherein the low-expansion artificial graphite occupies 65 to 95% of the total weight of the negative electrode active material.

2. The negative electrode active material of claim 1, wherein the low-expansion artificial graphite occupies 75 to 85% of the total weight of the negative electrode active material.

3. The negative electrode active material of claim 1, wherein the carbon-based material is made of natural graphite and artificial graphite

4. The negative electrode active material of claim 1, wherein the silicon-based material occupies 1 to 10 % of the total weight of the negative electrode active material.

5. The negative electrode active material of claim 1, wherein the silicon-based material occupies 3 to 7 % of the total weight of the negative electrode active material.

6. The negative electrode active material of claim 1, wherein the silicon-based material is silicon dioxide (SiO₂).

7. The negative electrode active material of claim 1, wherein a volume of the low-expansion artificial graphite expands by less than 23% when a battery is charged and discharged.

8. A negative electrode for a lithium secondary battery, the negative electrode comprising:
a current collector; and
a negative electrode active material layer formed on at least one surface of the current collector and including a negative electrode active material,
wherein the negative electrode active material is a negative electrode active material according to claim 1.

9. A lithium secondary battery comprising a positive electrode, a negative electrode and a separator interposed between the positive electrode and negative electrode,
wherein the negative electrode is a negative electrode according to claim 8.

10. The lithium secondary battery of claim 9, wherein the lithium secondary battery is a cylindrical secondary battery.

## Patentansprüche

1. Negativ-Elektrodenaktivmaterial für eine Lithiumsekundärbatterie, umfassend ein kohlenstoffbasiertes Material und ein siliziumbasiertes Material,
wobei das kohlenstoffbasierte Material niederausdehnendes künstliches Graphit umfasst,
wobei ein Volumen des niederausdehnenden künstlichen Graphits sich beim Laden und Entladen einer Batterie um weniger als 25 % ausdehnt;
wobei die Ausdehnungseigenschaften durch die Änderung der Dicke der Aktivmaterialschicht des niederausdehnenden künstlichen Graphits bestimmt werden, unter Verwendung einer Negativ-Elektrode unter Verwendung eines niederausdehnenden künstlichen Graphits als Aktivmaterial und einer Sekundärbatterie mit einer derartigen Negativ-Elektrode, wobei der Lade- und Entladezyklus wiederholt wird, bis keine Änderung der Dicke der Aktivmaterialschicht der Negativ-Elektrode mehr auftritt,
wobei die Negativ-Elektrode 94 Gew.-% eines niederausdehnenden künstlichen Graphits als Aktivmaterial, 2 Gew.-% von Mehrschicht-Kohlenstoffnanoröhren mit einem Durchschnittsdurchmesser von 20 nm und einer durchschnittlichen Länge von 2 µm als leitfähigem Material und 4 Gew.-% Polyvinylidenfluorid als Bindemittel verwendet, und
wobei der Lade-/Entladezyklus wie folgt ist: Entladen auf 2,5 V nach Laden auf 4,25 V; und
wobei das niederausdehnende künstliche Graphit 65 bis 95 % des Gesamtgewichts des Negativ-Elektrodenaktivmaterials einnimmt.

2. Negativ-Elektrodenaktivmaterial gemäß Anspruch 1, wobei das niederausdehnende künstliche Graphit 75 bis 85 % des Gesamtgewichts des Negativ-Elektrodenaktivmaterials einnimmt.

3. Negativ-Elektrodenaktivmaterial gemäß Anspruch 1, wobei das kohlenstoffbasierte Material aus natürlichem Graphit und künstlichem Graphit hergestellt ist.

4. Negativ-Elektrodenaktivmaterial gemäß Anspruch 1, wobei das siliziumbasierte Material 1 bis 10 % des Gesamtgewichts des Negativ-Elektrodenaktivmaterials einnimmt.

5. Negativ-Elektrodenaktivmaterial gemäß Anspruch 1, wobei das siliziumbasierte Material 3 bis 7 % des Gesamtgewichts des Negativ-Elektrodenaktivmaterials einnimmt.

6. Negativ-Elektrodenaktivmaterial gemäß Anspruch 1, wobei das siliziumbasierte Material Siliziumdioxid (SiO₂) ist.

7. Negativ-Elektrodenaktivmaterial gemäß Anspruch 1, wobei ein Volumen des niederausdehnenden künstlichen Graphits sich beim Laden und Entladen einer Batterie um weniger als 23 % ausdehnt.

8. Negativ-Elektrode für eine Lithiumsekundärbatterie, wobei die Negativ-Elektrode Folgendes umfasst:
einen Stromkollektor; und
eine Negativ-Elektrodenaktivmaterialschicht, die auf mindestens einer Oberfläche des Stromkollektors ausgebildet ist und ein Negativ-Elektrodenaktivmaterial umfasst,
wobei das Negativ-Elektrodenaktivmaterial ein Negativ-Elektrodenaktivmaterial gemäß Anspruch 1 ist.

9. Lithiumsekundärbatterie, umfassend eine Positiv-Elektrode, eine Negativ-Elektrode und einen zwischen der Positiv-Elektrode und der Negativ-Elektrode angeordneten Separator,
wobei die Negativ-Elektrode eine Negativ-Elektrode gemäß Anspruch 8 ist.

10. Lithiumsekundärbatterie gemäß Anspruch 9, wobei die Lithiumsekundärbatterie eine zylindrische Sekundärbatterie ist.

## Revendications

1. Matériau actif d'électrode négative pour une batterie secondaire au lithium incluant un matériau carboné et un matériau à base de silicium,
dans lequel le matériau carboné inclut du graphite artificiel à faible dilatation,
dans lequel un volume du graphite artificiel à faible dilatation se dilate de moins de 25 % lorsqu'une batterie est chargée et déchargée ; les caractéristiques de dilatation étant déterminées par la variation de l'épaisseur de couche de matériau actif du graphite artificiel à faible dilatation, au moyen d'une électrode négative utilisant un graphite artificiel à faible dilatation comme matériau actif et d'une batterie secondaire présentant une telle électrode négative, le cycle de charge et de décharge étant répété jusqu'à l'absence de variation de l'épaisseur de la couche de matériau actif d'électrode négative,
l'électrode négative utilisant 94 % en poids d'un graphite artificiel à faible dilatation comme matériau actif, 2 % en poids de nanotubes de carbone multicouches présentant un diamètre moyen de 20 nm et une longueur moyenne de 2 µm comme matériau conducteur, et 4 % en poids de fluorure de polyvinylidène comme liant, et
le cycle de charge/décharge étant le suivant : décharge à 2,5 V après charge à 4,25 V ; et
dans lequel le graphite artificiel à faible dilatation occupe 65 à 95 % du poids total du matériau actif d'électrode négative.

2. Matériau actif d'électrode négative selon la revendication 1, dans lequel le graphite artificiel à faible dilatation occupe 75 à 85 % du poids total du matériau actif d'électrode négative.

3. Matériau actif d' électrode négative selon la revendication 1, dans lequel le matériau carboné est composé de graphite naturel et de graphite artificiel.

4. Matériau actif d'électrode négative selon la revendication 1, dans lequel le matériau à base de silicium occupe 1 à 10 % du poids total du matériau actif d' électrode négative.

5. Matériau actif d'électrode négative selon la revendication 1, dans lequel le matériau à base de silicium occupe 3 à 7 % du poids total du matériau actif d'électrode négative.

6. Matériau actif d'électrode négative selon la revendication 1, dans lequel le matériau à base de silicium est du dioxyde de silicium (SiO₂).

7. Matériau actif d'électrode négative selon la revendication 1, dans lequel un volume du graphite artificiel à faible dilatation se dilate de moins de 23 % lorsqu'une batterie est chargée et déchargée.

8. Électrode négative pour une batterie secondaire au lithium, l'électrode négative comprenant :
un collecteur de courant ; et
une couche de matériau actif d'électrode négative formée sur au moins une surface du collecteur de courant et incluant un matériau actif d'électrode négative,
dans laquelle le matériau actif d'électrode négative est un matériau actif d'électrode négative selon la revendication 1.

9. Batterie secondaire au lithium comprenant une électrode positive, une électrode négative et un séparateur interposé entre l'électrode positive et l'électrode négative, dans laquelle l'électrode négative est une électrode négative selon la revendication 8.

10. Batterie secondaire au lithium selon la revendication 9, dans laquelle la batterie secondaire au lithium est une batterie secondaire cylindrique.
